(19) Europäisches Patentamt
European Patent Office
Office européen des brevets

(11) EP 4 749 503 A1

(12) EUROPEAN PATENT APPLICATION

(43) Date of publication:
27.05.2026 Bulletin 2026/22

(21) Application number: 24215221.3

(22) Date of filing: 25.11.2024

(51) International Patent Classification (IPC):
G06F 30/13 (2020.01)   G06F 30/27 (2020.01)
G05D 23/00 (2006.01)   G06F 111/10 (2020.01)
G06F 119/08 (2020.01)  G06F 111/04 (2020.01)

(52) Cooperative Patent Classification (CPC):
G06F 30/13; G05D 23/00; G06F 30/27;
G06F 2111/04; G06F 2111/10; G06F 2119/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: VITO NV
2400 Mol (BE)

(72) Inventors:
• DIRIKEN, Jan
  B-2400 Mol (BE)
• MIGLANI, Somil
  B-2400 Mol (BE)
• VAN OEVELEN, Tijs
  B-2400 Mol (BE)

(74) Representative: V.O.
P.O. Box 87930
2508 DH Den Haag (NL)

(54) **A SYSTEM AND COMPUTER-IMPLEMENTED METHOD FOR THERMAL CHARACTERIZATION OF A BUILDING FOR THERMAL ASSESSMENT AND/OR CONTROL**

(57) The present disclosure relates to a system and computer-implemented method for thermal characterization of buildings to assist in thermal assessment and/or control. A novel approach combining black-box and grey-box modeling techniques is integrated. Initially, a black-box fit is employed to generate model parameters based on training data specific to a building. These parameters are then used to establish initial parameters for a grey-box model through a parameter mapping process, which translates black-box model parameters into an equivalent set of grey-box model parameters while employing predefined equations and constraints to align the grey-box model with outcomes from the black-box model. The grey-box model parameters are further refined iteratively by fitting them against observed data using optimization techniques. This refinement aims to minimize discrepancies between model predictions and actual observations, with constraints imposed on the black-box model parameters to restrict the solution space during modeling.

FIG 1

EP 4 749 503 A1

**Description**

FIELD OF THE INVENTION

The invention relates to a method and system for thermal characterization of a building for thermal assessment and/or control. Furthermore, the invention relates to a system and computer-implemented method for performing energy control in a building, and wherein a refined grey-box model is utilized to develop and/or implement control strategies for the building's energy management system based on predictions generated by the refined grey-box model. Additionally, the invention relates to a controller for controlling conditions of a building using predictions of a grey-box model. Also, the invention relates to a computer program product.

BACKGROUND TO THE INVENTION

Computational modeling of buildings and other related systems plays an important role in various practical and scientific applications, from predicting energy consumption to optimizing the design for improved environmental performance. Several approaches, including white-box, black-box, and grey-box models, have been traditionally utilized to simulate and understand the complex dynamics of such systems.

White box models, grounded in thorough theoretical knowledge and specific equations that describe the physical processes precisely, offer high-fidelity representations but often require extensive and detailed information about system parameters. The complexity and the high computational cost associated with these models limit their practicality for large-scale applications or for circumstances where detailed information is scarce or difficult to ascertain. It can also limit their use for real-time control applications.

In contrast, black-box models, while beneficial due to their reliance on observed data to develop system outputs without presupposing a thorough understanding of underlying processes and also due to their reduced expert intervention, often lack transparency in how input data translate into output. This limits their capacity to provide insights into the system's internal dynamics or to generalize beyond the scope of the data used for their training. Moreover, their parametric inflexibility often results in models that cannot adapt well to changes in system dynamics or external conditions.

Grey box models attempt to bridge this gap by integrating empirical data with a simplified representation of theoretical principles, allowing for more adaptable and insightful models compared to purely empirical or theoretical approaches. However, conventional methodologies for parameter estimation in grey-box models often face significant challenges. The common practice tends to rely heavily on iterative trial-and-error methods, which are not only time-consuming but also require substantial expertise and intuitive judgment to strike an optimal balance between model complexity and computational feasibility.

In building energy modeling, especially when working with grey-box models (which combine physical laws with empirical data), identifying the optimal model parameters (like thermal resistances and capacities) can be difficult. The success of finding the best-fit parameters highly depends on the initial guesses and the constraints set for these parameters. Since the parameter identification process is non-linear, it can become complex and time-consuming, requiring manual intervention by experts to adjust initial guesses based on the model's performance metrics (e.g., RMSE, Variance, and MAPE). This traditional approach is not scalable for modeling large numbers of buildings and raises concerns.

Additionally, existing methods frequently struggle with issues such as converging to local optima rather than finding a global optimum solution for parameter values, particularly when dealing with non-linear behaviors and interactions intrinsic to complex systems like building dynamics. The choice of initial parameter estimates significantly influences the quality of solutions, yet there remains a lack of a systematic, efficient approach to deriving and refining these estimates.

Thus, there exists a need for a robust, efficient, and improved systematic approach to parameter estimation that overcomes the limitations of both black-box and traditional grey-box modeling techniques, particularly in terms of generalization, accuracy, and computational efficiency. There is also a need for an approach that better allows for automation and scalability. The practical deployment of such systems in predictive and operational settings demands improved methodologies that can dynamically adapt to varying conditions and provide reliable, accurate results in a computationally efficient manner.

SUMMARY OF THE INVENTION

It is an object of the invention to provide for a method and a system that obviates at least one of the above mentioned drawbacks.

Additionally or alternatively, it is an object of the invention to provide for an improved system and computer-implemented method for thermal characterization of a building for thermal assessment and/or control.

Additionally or alternatively, it is an object of the invention to improve the accuracy and/or efficiency of parameter estimation in model-based simulations of physical building systems.

Thereto, the invention provides for computer-implemented method for thermal characterization of a building for thermal assessment and/or control, including the steps of: performing a black-box fit to generate model parameters of a black-box model based on training data associated to the building; determining initial model parameters of a grey-box model based on the model parameters of the black-box model, wherein the determination of initial model parameters of the grey-box model involves a parameter mapping process that translates model parameters of the black-box model into an equivalent set of parameters for the grey-box model, wherein a series of predefined equations and constraints are employed in order to ensure that the grey-box model parameters are aligned with quantitative outcomes derived from black-box model computations; and iteratively refining the grey-box model parameters by fitting the grey-box model parameters to observed data using an optimization technique for reducing discrepancies between model predictions obtained by means of the grey-box model and observed data; and wherein during the black-box fit linear constraints are employed on the black-box model parameters based on modelling of the grey-box model in order to restrict a solution space.

A robust thermal characterization of buildings is obtained, integrating improved modeling techniques that enhance predictive accuracy and model fidelity through a structured transition from a black-box model to a more intricate grey-box model. The black-box model can be effectively utilized as a pre-cursor to the grey-box model. Automation can also be enhanced that enables scalability. A black-box model can be used to generate initial parameters, which are derived from building-specific training data. This step can be constrained by the application of linear constraints during the model fitting process. These constraints, which can be defined based on preliminary insights from grey-box modeling, can incorporate more detailed physical relationships, help in tailoring the black-box model more accurately towards real-world phenomena.

Physical knowledge can be effectively incorporated into the black-box model during the initial modeling phase to ensure that the resulting model parameters provide a viable foundation for subsequent detailed grey-box model training. This integration of physical principles can be executed by defining constraints in the black-box model based on the (anticipated) structure of the grey-box model. Specifically, the selection of a grey-box model template may dictate a configuration of constraints in the black-box model, such that the black-box model outputs parameters that are not only statistically fitting but also physically plausible for transitioning into the grey-box model.

This method allows for the grey-box model to be effectively preconfigured in its initial state by utilizing a black-box model that is tailored through constraints derived directly from a chosen grey-box model template. By doing so, the black-box model parameters are aligned with the physical realities represented in the grey-box model, ensuring that the initial parameter set serves as a practical and relevant starting point for detailed model refinement.

A grey-box model template may be a predefined framework that outlines the structure and configuration of a grey-box model based on various building characteristics and targeted control objectives. Multiple templates can be defined to accommodate different types of buildings and their specific energy dynamics. Each template may include a set of basic equations that represent simplified physical principles combined with empirical data, tailored to capture essential thermal properties and dynamics specific to the building type. This flexibility allows the system to adapt the model more accurately to real-world scenarios, enhancing the precision of energy consumption predictions and/or efficiency in thermal control.

Following the initial parameter estimation using the black-box model, the method can translate the parameters derived from the black-box model into parameters suitable for a grey-box model. Once initial grey-box model parameters are established, the method can advance into an iterative refinement phase. This stage may involve adjusting the grey-box parameters to better align with observed data, utilizing an optimization technique. This technique in some examples takes the form of a statistical or numerical method such as a least squares method, which minimizes discrepancies between the predictions of the grey-box model and actual observed data. This iterative refinement can improve the model's accuracy and reliability in predicting and managing building thermal characteristics.

Linear constraints can be embedded into the black-box model parameters based on the conceptual framework of the grey-box model. These constraints can effectively restrict the solution space by enforcing energy conservation and/or physical connectivity rules derived from the grey-box model's theoretical underpinnings. By doing so, the method ensures that the black-box fit does not stray into physically implausible parameter areas, thus enhancing the relevance and applicability of the results.

Such an approach enables precise thermal characterization of buildings, supporting thermal assessment and control applications that require detailed and accurate predictive capabilities. Not only the practicality of thermal assessments is enhanced but also more improved energy management strategies informed directly by the refined grey-box model can be achieved. Advantageously, an improved understanding and control over the thermal dynamics of buildings can be obtained, leading to improved energy efficiency, comfort, and operational planning.

The integration of constraints based on physical models can guarantee that this method remains grounded in the important principles of building physics and arrangement, ensuring its relevance and applicability across a broad spectrum of real-world scenarios.

Optionally, wherein during the black-box fit constraints are imposed on the black-box model parameters based on energy conservation principles.

This introduction of physically meaningful constraints at the early stages of modeling ensures that the derived parameters for the black-box model adhere to important energy balance considerations, thereby enhancing the physical plausibility and reliability of the model outputs.

The constraints can effectively act as a check on the computational process, ensuring that the outcomes are not only statistically fitting but also make practical sense within the bounds of established physical laws. For thermal assessment and control applications, having a model that respects energy conservation can be important. It ensures that any control strategies derived from the model are viable and effective when applied in real-world scenarios, preventing strategies based on flawed assumptions that can lead to energy inefficiencies or system failures. The constraints can be integrated as part of the model formulation before the fitting process begins. These can manifest as fixed sum constraints on certain parameter groups or exclusion/inclusion of specific interactions within the model, dictated by the energy flow dynamics of the building model under consideration.

Optionally, wherein the parameter mapping process involves solving a set of (equivalence) equations that represent a relationship between the black-box model parameters and the grey-box model parameters, using a least squares method to approximate grey-box model parameters.

The parameter mapping may involve an equivalence followed by an estimation (e.g. least squares). A set of (equivalence) equations may be used that link grey-box parameters to that of the black-box. The goal is to find the set of grey-box parameters that lead to the best residuals. It will be appreciated that other parameter mapping processes may also be employed.

The least squares method is a statistical technique utilized to effectively minimize the sum of the squares of the differences (relative residuals) between the predicted outputs of the grey-box model and the actual observed data. The black box parameters may span several orders of magnitude, so minimizing residuals can give priority to the highest black-box parameters.

Initially, the parameters determined from the black-box model, can be translated into initial guesses for the grey-box model parameters through a set of predefined equations. These equations are configured to map the more abstract parameters of the black-box model into physically meaningful parameters that the grey-box model can utilize.

The least squares method can then be applied to these initial translations to iteratively adjust and refine the grey-box model parameters. By doing so, the method can seek to reduce the overall discrepancies between the model's predictions and the observed data. This iterative process of adjustment can be guided by the objective of minimizing the total squared error, which quantifies the aggregate difference between the expected model outputs (given the current parameter estimates) and the actual data collected from the real-world system.

Through repeated iterations and refinements, this process can narrow down towards an optimal set of parameters for the grey-box model. These parameters are those that best fit the actual system's behavior according to the observed data, thus enhancing the accuracy and reliability of the model.

Optionally, wherein the optimization technique for refining the grey-box model parameters utilizes a cost function that measures the sum of squared relative errors between computed grey-box model predictions and observed data.

The refinement technique within the grey-box model can ensure the accuracy and reliability of the thermal characterization of buildings. The cost function can be specifically configured to measure the discrepancies between the predicted data, as generated by the grey-box model, and the actually observed data. The primary aim here is to minimize these discrepancies, making the grey-box model's predictions as close to reality as possible.

The cost function employed typically quantifies the sum of squared relative errors between the predicted outcomes by the model and the observed empirical data. Each prediction that the model makes may be compared to actual observations, and any deviation can be squared and summed up. The squaring of errors can ensure that higher errors are disproportionately penalized, driving the optimization process to prioritize major inaccuracies.

The optimization process may involve iteratively adjusting the model parameters. Initial parameters may be estimated from the black-box model and may be mathematically translated to serve as starting parameters for the grey-box model. These parameters may then be refined by fitting them to the observed data using the defined cost function. This step in some examples employs techniques such as gradient descent or other numerical methods that iteratively adjust parameters to find a minimum for the cost function. After one or more iterations, the results may be assessed. In some examples, if the results are not satisfactory (i.e., the cost function values are still high), the parameters may be further tweaked and the process can repeat.

The precision of the grey-box model can directly influence decisionmaking in building energy management. By having a model that closely aligns with the real-world dynamics of the building's thermal characteristics, the model can simulate conditions under various scenarios, helping in planning for energy requirements or help to predict the impact of external temperature variations and adapt the building's energy systems accordingly, for example.

Optionally, wherein the optimization technique involves adjusting bounds and initial values of the grey-box model parameters during the iterative refinement process to accelerate convergence towards an optimal solution.

Local minima are points in the parameter space where the model may show minimum error locally but not globally. Sticking to a local minimum can prevent finding a truly optimal solution that globally reduces discrepancies. Dynamic adjustments help the algorithm to "jump out" of these local minima by altering the search landscape, thus facilitating the discovery of global minima. The process may also involve modifying the learning rate, which is the step size used to update the parameters. By adjusting this rate based on the progress of convergence, the model can make larger changes when far from the optimum and smaller, finer adjustments as it nears the optimal values.

The adjustments and dynamic nature of the process ensure robust convergence, meaning the model is more in some examples to converge to a solution that is resilient to variations in data and model assumptions.

Optionally, wherein the grey-box model is a resistor-capacitor, RC, model, and the determination of initial model parameters of the grey-box model involves translating the initial model parameters of the black-box model into RC-model parameters, such that the translation accounts for the physical properties of thermal resistances and capacities represented in the RC-model, wherein the translation includes applying a series of mathematical relationships that align matrix elements of the black-box model with equivalent thermal resistance and capacity values in the RC-model.

The process of translating black-box parameters into resistor-capacitor (RC) model parameters for a grey-box model is an important aspect of creating more descriptive and accurate thermal models for various applications, particularly in building science. This translation is largely mathematical but grounded in the physical understanding of how buildings respond to thermal inputs and environmental conditions.

The black-box model may involves a set of parameters derived strictly from input-output data without any direct consideration of the underlying physical processes. It is called a "black-box" because it treats the system as a mysterious box that one cannot see inside. It's typically used for its simplicity and the ease of fitting it to large datasets. The grey-box model strikes a balance between a purely theoretical model (white-box) and the black-box model. It incorporates both empirical data (similar to the black-box) and elements of physical theory, thus providing a more understanding. This model type is described as "grey" because it opens up the black-box partially - enough to integrate some theoretical principles, but not fully to the extent of detailed mechanistic models.

The process begins by mapping the parameters derived from the black-box model (such as coefficients representing system responses to variations in input) to parameters that have physical significance within a grey-box framework, such as resistances (R) and capacitances (C) in an RC network. Mathematical relationships can be derived to correlate these empirical parameters with physical characteristics. For instance, in an RC model, thermal resistance may represent the degree to which a building component delays the flow of heat, while thermal capacitance may indicate the ability of a component to store heat.

Constraints rooted in structural arrangement and physical restrictions, such as conservation of energy, can be applied to ensure that the translation respects physical reality. For instance, the sum of all power inputs and losses within the system may be constrained to equal the changes in stored energy, reflecting the principle of energy conservation.

The translation process enhances the fidelity of the grey-box model to real-world phenomena by ensuring that the parameters used are not only statistically significant but also physically accurate (cf. physics-informed). This allows for better predictions and more reliable simulations, particularly when the model is used for building thermal assessment or control purposes.

By incorporating physical principles, grey-box models reduce the potential for overfitting that can occur with black-box models, thus providing predictions that are more generalizable.

Unlike black-box models, the parameters of grey-box models can have direct physical interpretations, making the models more understandable and actionable for engineers and operators.

Strict linear constraints can be imposed on the black-box model fit based on the topology of resistance-capacitor networks in corresponding grey box models. This can effectively ensure accurate parameter initialization by enforcing constraints such as setting specific matrix elements to zero and maintaining row sum constraints that mirror structural restrictions and/or physical conservation laws. This targeted constraint application directly addresses the challenges of parameter convergence and stability in the training phase, reducing computational complexity while maintaining fidelity to the structural and physical situation.

Optionally, wherein building-specific data is utilized to adjust initial estimations of resistance-capacitance (RC) model parameters.

By incorporating specific building data, such as structural attributes, insulation quality, window placement, and exposure, the RC model parameters can be adjusted to reflect the unique thermal behavior of each building. This information can be important, given that different buildings exhibit diverse thermal responses due to varying architectural designs, materials, and construction techniques. With tailored model parameters, targeted energy optimization strategies can be developed. This may include specific heating, ventilation, and air conditioning (HVAC) settings, optimized for energy efficiency without compromising comfort. Although the model utilizes specific building data for parameter adjustments, the underlying method is scalable. This approach can be systematically applied across a diversified portfolio of buildings such as residential complexes, office buildings, and industrial facilities, each benefitting from customized modeling.

By continuously refining the RC model parameters through real-time data and feedback, the system can adapt to changes and improvements in building characteristics or usage patterns. For example, a building renovation that improves insulation quality can be promptly integrated into the model, thus maintaining its accuracy over time.

Optionally, wherein the iterative refinement of grey-box model parameters includes using information from lower order models as initial values.

Leveraging information from simpler, lower-order models as initial values in more complex modeling scenarios is an approach that optimizes the parameter estimation process in computational modeling. Validated, simpler models can be used to provide a solid foundation for initializing more improved, higher-order models, which often carry larger sets of parameters and higher complexity.

Using outputs from lower-order models provides a more accurate starting point for higher-order models. This is particularly valuable in grey-box models where initial accuracy in parameter estimation can significantly influence the convergence rate and overall model performance. For instance, if a simpler RC model has already established basic temperature-resistance relationships, these parameters can guide the initial settings for a more elaborate multi-zone building model, effectively grounding the complex model in physically realistic scenarios from the start.

Starting with an estimate from a simpler model can drastically reduce the computational overhead involved in the optimization process of complex models. By narrowing down the parameter space early on, the iterative process becomes more focused, converging more quickly than if starting from a broader, less informed initial state. This is especially beneficial in scenarios involving large datasets or real-time processing requirements, where computational efficiency can be important.

Leveraging simpler models accelerates the iterative refinement process in complex models. Initial values that are already close to optimal based on empirical evidence allow each iteration to make smaller, more precise adjustments. This not only speeds up the refinement process but also enhances the precision of the final model parameters, contributing to more accurate predictions and assessments.

By integrating insights from simpler models, the initialization phase for complex models does not start in a vacuum but is enriched with empirical data and proven model relationships. This methodological synergy between different orders of models underscores a whole approach to building modeling and energy management, providing greater accuracy and/or efficiency in thermal assessments and controls within buildings.

Optionally, further comprising a multi-shot parameter identification for the selection of optimal grey-box model parameters, wherein multiple iterations of parameter estimation are conducted, each with varied initial guesses, to generate a dataset of potential solutions.

This approach enhances the traditional parameter estimation process by incorporating a series of iterative estimations, each beginning with different initial parameter guesses. Multiple initial guesses for the model parameters may be generated. These guesses may diverge from a range of feasible values, derived from prior empirical data or hypothetical scenarios relevant to the building's characteristics. Each set of initial guesses may be used to compute model parameters independently using the black-box model.

The grey-box model may undergo an optimization loop, where parameters are refined through least squares minimization, aligning the model more closely with observed real-world data. The diverse outcomes from the multiple initial guesses may generate a rich dataset. This dataset an encapsulates variation across the possible spectrum of building dynamics. From the broad range of results, the most effective parameter sets may be selected based on defined criteria, such as minimal error rates or best fit with observed data. Statistical tools and model comparison metrics can be applied to ascertain the best-performing models within this dataset.

Optionally, wherein the observed data used for iteratively refining the grey-box model parameters includes at least one of temperature measurements, energy consumption data, or solar irradiance data specific to the building being thermally characterized.

Incorporation of diverse observational data, such as temperature measurements, energy consumption, and solar irradiance, into the iterative refinement of grey-box model parameters enriches the modeling process. This approach enhances the adaptation and responsiveness of the model to actual building dynamics, making it a robust tool for detailed energy analysis and optimization.

Using a variety of observational data, the grey-box model refinement process continually adjusts and fine-tunes the model parameters to closely mirror real-world data. Temperature measurements provide direct feedback on the thermal behavior of the building, energy consumption data reflect the building's operational efficiency, and solar irradiance influences the thermal gains and losses, impacting the internal climate. Each type of data provides unique insights that are important for calibrating the model to reflect true building performance accurately.

The assimilation of various types of observational data allows the model to capture a comprehensive picture of the building's dynamics. Temperature data help in understanding the heat distribution and retention within the building, energy consumption reveals the energy efficiency and areas where improvements may be possible, and solar irradiance helps in predicting the variability in heating requirements due to natural light and heat. These dimensions of data contribute to a more whole approach in modeling, where interactions between different factors are considered and incorporated.

With iterative refinements based on diverse data inputs, the grey-box model becomes increasingly predictive, supporting proactive energy management strategies. For instance, accurate predictions of heating needs based on solar irradiance and temperature forecasts can enable dynamic adjustments to HVAC operations, thereby enhancing the energy efficiency of the building.

The flexibility offered by integrating multiple data types allows the grey-box model to be customized for specific buildings or scenarios. Different buildings have unique characteristics and operational dynamics, which can be effectively captured through tailored parameter adjustments informed by targeted observational data. This adaptability makes the grey-box model applicable in diverse architectural and climatic contexts.

The refined grey-box model, drawing on a broad spectrum of observational data, serves as an excellent basis for developing and implementing energy management and control strategies. By understanding how various factors affect energy consumption and internal climate conditions, operational/facility managers can deploy more efficient energy use policies, optimize heating and cooling cycles, and reduce operational costs.

In some examples, the observed data used for iteratively refining the grey-box model parameters includes at least temperature measurements (e.g. indoor and outdoor temperature) and heat input data (cf. energy consumption). The results can be further improved by for instance using solar irradiance data.

Optionally, one or more matrix elements of the black-box model are set to zero to reflect the absence of physical connections or energy transfer pathways in the grey-box model and/or one or more matrix elements of the black-box model are set so that their sums equal one to enforce energy conservation within the system, such that the total energy input equals the total energy output, so as to maintain physical integrity of the model.

The translation from nonlinear grey box model training to linear black box model training can simplify the modeling process. By adopting a linear approach for the black box model, the method eliminates the complexities associated with nonlinear dynamics in the grey box model. This simplification is achieved by reducing the training requirements and dependencies on the initial guesses for parameters, which are often a critical factor in the convergence and accuracy of nonlinear models. This shift towards a linear framework allows for a more straightforward and reliable estimation of initial model parameters, providing a robust foundation for further refinement within the grey box model.

In some examples, specific matrix elements of the black-box model are set to zero to accurately represent the lack of direct thermal interactions or energy transfer pathways that do not exist in the actual building system being modeled. This deliberate nullification of certain matrix coefficients effectively prevents the model from taking into account nonexistent energy flows, thereby enhancing the model's reliability and preventing misinterpretations that could arise from overfitting or incorrect assumptions about the building's thermal dynamics.

Furthermore, additionally or alternatively, other constraints can be imposed on the matrix elements of the black-box model such that their sums equal one. This constraint can be important for maintaining energy conservation within the system. By enforcing that the sum of the coefficients in a certain equation equals one, the model adheres to the physical principle that the total energy entering a system (such as a building) must be equal to the total energy exiting the system, adjusted for any storage or losses. This adherence to conservation laws ensures that the grey-box model provides outputs that are not only consistent with observed thermal behavior but also grounded in the fundamental laws of physics.

Zeroing out certain matrix elements and ensuring others sum to a preset value, can allow to effectively incorporate physical knowledge during the initial modeling phase to ensure that the resulting model parameters provide a viable foundation for subsequent detailed grey-box model training.

According to an aspect, the invention provides for a system for thermal characterization of a building for thermal assessment and/or control, the system comprising a data processing unit configured to perform the steps of: performing a black-box fit to generate initial model parameters of a black-box model based on training data associated to the building; determining initial model parameters of a grey-box model based on the initial model parameters of the black-box model, wherein the determination of initial model parameters of the grey-box model involves a parameter mapping process that translates model parameters of the black-box model into an equivalent set of parameters for the grey-box model, wherein a series of predefined equations and constraints are employed in order to ensure that the grey-box model parameters are aligned with quantitative outcomes derived from black-box model computations; and iteratively refining the grey-box model parameters by fitting the grey-box model parameters to observed data using an optimization technique for reducing discrepancies between model predictions obtained by means of the grey-box model and observed data; and wherein during the black-box fit linear constraints are employed on the black-box model parameters based on modelling of the grey-box model in order to restrict a solution space.

Manual expert intervention in the model parameter identification process can be effectively reduced. This can lead to a better scalability and/or enable improved automation. Furthermore, a better, more accurate fit of the model to the data can be obtained. The constrained black-box fit is data-driven.

The black box modeling approach may rely on predefined specifications of the grey box model it aims to train. This dependency may necessitate a clear understanding and definition of the desired grey box model before initiating the black box modeling process.

In some examples, the grey box models are structured as resistance-capacitor networks, which provide a framework with specific physical interpretations for each node, such as internal zone temperature or wall temperature. To effectively simulate this structure using black box models, constraints may be necessary to prevent all possible connections between nodes, which would not reflect the physical reality of the system. By selecting a template for the desired grey box model, these constraints can be effectively applied during the black box model training. This process ensures that the initial training of the black box model incorporates physical insights, making it a more meaningful starting point for subsequent refinement in the grey box model training. Essentially, this approach integrates physical reasoning from the outset, aligning the black box model's structure with the intended grey box model through deliberate constraints based on the chosen template.

Every grey-box model can be represented as a black-box model, but not vice versa. In some examples, a two-state model structure is created that accounts for temperature changes and heat inputs. By applying predetermined constraints to the black-box model, it can be effectively ensured that the model adheres to certain structural constraints (in the grey-box modelling of the building) and/or physical principles, such as energy conservation, making the problem linear and easier to solve.

The parameters for the grey-box model are then derived from the black-box model results. This involves translating the black-box model parameters into grey-box model parameters through a set of equations. Since this process can produce an overdetermined system, a least squares method can be used to find an approximate solution, which is faster and allows for the exploration of a wide range of initial guesses.

A broad distribution of initial guesses may be generated to cover all potential building models. The selection of the "best" solution from the results of the least squares method may be performed using a metric or procedure.

According to an aspect, the invention provides for a computer-implemented method for performing energy control in a building, comprising performing the steps of the method for thermal characterization of a building for thermal assessment and/or control according to the disclosure, and wherein the refined grey-box model is utilized to develop and/or implement control strategies for the building's energy management system based on predictions generated by the refined grey-box model.

The refined grey-box model can predict thermal loads and optimize HVAC operations to pre-empt temperature fluctuations, thereby reducing operational costs and energy use. This predictive capability allows the system to adjust settings before energy wastage occurs.

By continuously analyzing predictions against actual building conditions, the system can adjust parameters to maintain optimal comfort levels. For instance, on a particularly sunny day, the model may anticipate increased indoor temperatures and a controller can be configured to adjust air conditioning settings accordingly ahead of time.

The building model, whether in its black-box or refined grey-box form, can be about understanding and predicting the thermal dynamics of the building based on various inputs and physical principles. On the other hand, the controller can utilize this model to make informed decisions. It can act based on the model's predictions to e.g. optimize the operations of assets like HVAC systems within the building, ensuring that energy efficiency is maximized without compromising comfort levels. The controller, therefore, relies on the accuracy and predictive power of the building model to implement control strategies that are both effective and efficient, adjusting the building's systems in real-time to e.g. respond to anticipated changes in thermal load.

The model may integrate with smart grid technology to participate in demand response programs. By predicting peak load periods, the system can temporarily reduce energy consumption, aiding in grid stability and enabling the building to benefit from utility incentives.

Predictive maintenance becomes more streamlined as the model can forecast potential system failures or inefficiencies. For instance, if heating efficiency drops unexpectedly, the model may predict this as a symptom of a failing HVAC component before a total breakdown occurs.

In some examples, the refined model may be fully integrated into an existing Building Management Systems (BMS) to allow seamless automation and control. This integration may involve not only software compatibility but also aligning the model's output with actionable controls within the BMS.

Providing dashboards that display real-time data, predictions, and system status can maintain ease of control.

According to an aspect, the invention provides for a controller for controlling conditions of a building using predictions of a grey-box model obtained by performing the method for thermal characterization of a building for thermal assessment and/or control according to the disclosure.

The controller can effectively ensure parameter stability and accurate system representation, thereby enabling precise predictive control and robust feedback mechanisms in dynamic control systems.

The refined grey-box model can offer precise insights into thermal dynamics and energy exchanges within the building. The controller can use this information to optimize energy usage, for example, reducing heating during peak times and increasing heating during off-peak times.

The controller may integrate seamlessly with existing building management systems (BMS), utilizing standard protocols to communicate with other system components like HVAC units, lighting systems, and security systems. This integration allows for whole management of the building's environmental parameters.

For example, in commercial settings like office buildings or shopping malls, the controller can dynamically manage air conditioning systems and lighting based on occupancy and external weather conditions, significantly reducing energy costs while ensuring comfort. For example, in industrial settings, maintaining precise conditions can be important to production quality. The controller can manage internal environment conditions to minimize the impact of external temperature variations and internal heat loads produced by machinery. For example, for residential buildings, especially high-rise apartments with varying exposure to environmental elements, the controller can manage heating and cooling efficiently to adapt to each unit's specific needs, based on its orientation, external weather conditions, and occupancy patterns.

According to an aspect, the invention provides for a computer program product for characterizing a building for thermal assessment and/or control, the computer program product comprising a non-transitory computer-readable medium having computer-readable instructions stored thereon which, when executed by a processor, cause the processor to perform the method for thermal characterization of a building for thermal assessment and/or control according to the disclosure.

The imposition of linear constraints can eliminate the possibility of certain connections within the model that are not physically justifiable, thereby improving the model without sacrificing necessary detail. For example, if a matrix element does not represent a physical connection or energy transfer pathway in the system, it is set to zero.

Linear constraints reflective of the underlying physical principles dictated by corresponding grey box models enable to enhance computational efficiency and modeling precision. This an be done for instance by systematically applying constraints such as zeroing specific matrix elements and ensuring row summation conditions. By doing so, the model not only simplifies the parameterization process by reducing reliance on initial parameter guesses but also rigorously aligns with the physical interactions and energy conservation principles inherent in the system's dynamics. This approach facilitates a more accurate and physically plausible parameter estimation, paving the way for robust model refinement and validation within the framework of grey box modeling.

According to an aspect, the invention provides for a computer-implemented method for modeling dynamic systems, wherein a black-box model is employed to generate initial parameters based on training data, the method further comprises configuring constraints within the black-box model derived from a predetermined grey-box model template, wherein said constraints are selected to reflect physical relationships expected in the grey-box model. In this way, it can be effectively ensured that the generated parameters are physically interpretable and provide a valid foundation for subsequent grey-box model refinement.

It will be appreciated that any of the aspects, features and options described in view of the methods apply equally to the systems and the described devices (e.g. controller, or control devices), computer program products, etc. It will also be clear that any one or more of the above aspects, features and options can be combined.

BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:

Fig. 1 shows a schematic diagram of an embodiment of a system;
Fig. 2 shows a schematic diagram of an embodiment of a resistor-capacitor model of a building;
Fig. 3 shows a schematic diagram of an embodiment of a model;
Fig. 4 shows a schematic diagram of a method; and
Fig. 5 shows a schematic diagram of exemplary graphs.

DETAILED DESCRIPTION

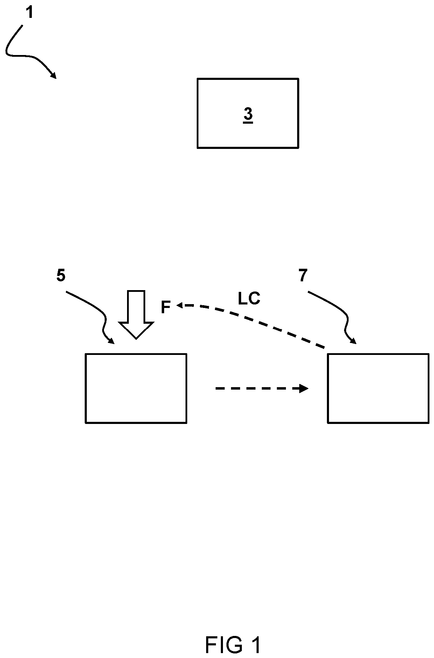

Fig. 1 shows a schematic diagram of an embodiment of a system 1 for thermal characterization of a building for thermal assessment and/or control. The system 1 comprises a data processing unit 3 configured to performing a black-box fit F to generate initial model parameters of a black-box model 5 based on training data associated to the building. The data processing unit is further configured to determine initial model parameters of a grey-box model 7 based on the initial model parameters of the black-box model 5. The determination of initial model parameters of the grey-box model 7 involves a parameter mapping process (e.g. mathematical approximation or equivalence) that translates model parameters of the black-box model 5 into an equivalent set of parameters for the grey-box model 7, wherein a series of predefined equations and constraints are employed in order to ensure that the grey-box model parameters are aligned with quantitative outcomes derived from black-box model computations. The data processing unit 3 is further configured to iteratively refining the grey-box model parameters by fitting the grey-box model parameters to observed data using an optimization technique for reducing discrepancies between model predictions obtained by means of the grey-box model 7 and observed data. Advantageously, during the black-box fit F linear constraints LC are employed/imposed on the black-box model parameters based on modelling of the grey-box model 7 in order to restrict a solution space.

The system can provide for a streamlined modeling process that enhances computational efficiency and accuracy by transitioning from nonlinear grey box model training to linear black box model training. During training of the black box model, linear constraints can be enforced on matrix elements and row sums to align with structural characteristics of the building (cf. represented in the grey-box model) and even physical conservation laws, ensuring parameter stability and accurate system representation for e.g. reliable control system feedback.

By incorporating linear constraints and predefined specifications, the invention aims to enhance the accuracy and reliability of the black box models while ensuring they are representative of the physical systems they model. This method facilitates a streamlined training process, reduces the dependency on initial parameter estimates, and integrates physical insights from the outset, ultimately improving the model's predictive performance and relevance in real-world applications.

Building training data may for instance be historical and/or real-time data pertaining to the building's thermal characteristics, including temperature measurements, energy consumption data, and solar irradiance data.

Also, building-specific data may be used such as data such as building materials, insulation properties, and layout that may influence the model parameters.

The black-box model 5 can be trained based on the training data from the building. The model 5 can incorporate linear constraints based on energy conservation principles and parameters related to the grey-box model to limit the solution space appropriately. This ensures the model's outputs remain realistic and physically plausible.

Using predefined equations and constraints, the black-box model parameters (which are typically empirical and statistical) can be aligned with the physically interpretable parameters of the grey-box model 7. Such a translation may involve solving a set of equations, often through methods like least squares, to refine these parameters further to more closely reflect the building's physical and thermal properties.

The grey-box model 7 can receive its initial parameters from the parameter mapping process. Then, the parameters can be further refined iteratively using an optimization technique, which minimizes discrepancies between the model's predictions and observed data.

The refined grey-box model can yield predictions about the building's thermal behavior. These predictions can be used for various applications, including energy management and control strategies aimed at enhancing energy efficiency and comfort levels within the building.

In some examples, the grey-box model can be an RC model, translating the black-box parameters into RC-model parameters.

In some examples, constraints applied during the black-box modeling and translation process may include zeroing particular matrix elements or ensuring that sums of elements equal one to enforce physical laws like energy conservation.

The system 1 blends empirical data-driven black-box modeling with a more structured and physically grounded grey-box modeling approach, in an effective way, by applying linear constraints during the (constrained) black-box fit, e.g. apply energy conservation principles and grey-box model-related parameters. Certain black-box parameters can be restricted/constrained based on expected physical properties derived from preliminary grey-box modeling insights.

The limitations or conditions applied to the model parameters or their relationships can ensure that they adhere to known physical principles, despite the model's primary reliance on data-driven predictions. These constraints can guide the model towards physically plausible solutions without strictly enforcing a specific outcome, thus retaining flexibility in the black-box modeling process.

Linear problems are generally easier and faster to solve than non-linear ones, especially in parameter optimization and identification tasks. By imposing constraints that align with physical reality, the parameter space that the black-bo model explores becomes more structured and can often be navigated more efficiently. This is because the constraints limit the range of possible values the parameters can take, reducing the complexity of the optimization problem.

In some examples, the constraints are applied to the black-box model by setting specific matrix elements (related to the building's thermal properties and energy transfer processes) to zero and/or by ensuring certain sums equal one. The matrix formulation of the black-box model, which includes these constraints, thus becomes a simplified representation that still captures the essential dynamics of the building's energy behavior.

This approach is more scalable to large datasets or multiple buildings since it reduces the computational complexity, making it feasible to apply the model to larger sets of buildings without a proportional increase in computational resources or time.

Furthermore, by guiding the model towards physically plausible solutions, such constrained black-box fit helps to avoid unrealistic parameter values that could lead to inaccurate predictions.

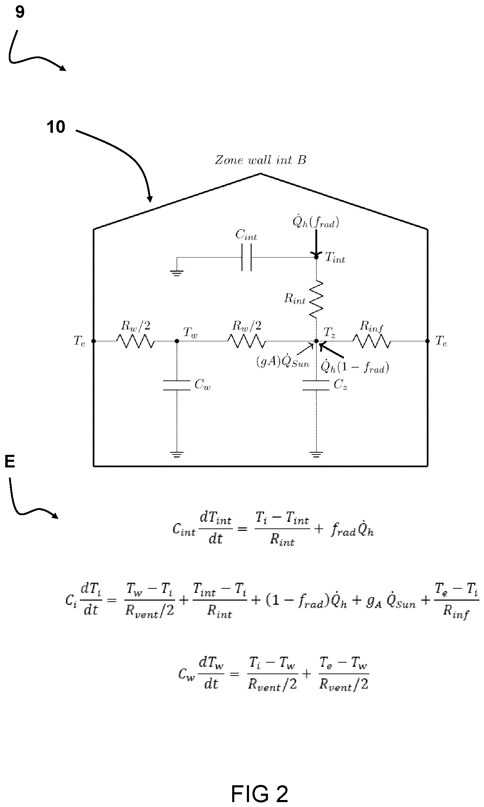

Fig. 2 shows a schematic diagram of an embodiment of a resistor-capacitor model 9 of a building 10. The figure presents a simplified schematic diagram of an RC model used for thermal characterization of buildings. The model represents the building as a network of thermal resistances R and capacitances C, which simulate the heat transfer dynamics within the building. Resistors R represent the thermal resistance between different zones of the building or between the building and the external environment. Each resistor may be labeled with an 'R' followed by a subscript to denote its specific location and interaction. Capacitors C represent the thermal capacitance of various building components, such as walls or the air within a room. Each capacitor stores thermal energy and is labeled similarly to resistors. The capacitors can be connected via resistors in a network that mirrors the physical layout and thermal interactions within the building. The connections illustrate pathways for heat flow, such as from the exterior environment through the building envelope to the interior spaces.

The model may include inputs such as ambient temperature and solar irradiance, represented by arrows entering the network. Outputs from the model may include indoor temperatures, which can be important for thermal assessments.

Each component and connection in the RC model may be annotated with equations E or identifiers that link to the mathematical relationships.

The RC model can be used to refine the grey-box model parameters iteratively by fitting the model to observed data, which includes temperature measurements and other relevant environmental inputs.

The black-box fit to the building data may involve finding a mathematical model that accurately predicts the building's thermal behavior based on historical data. The parameters of this black-box model (elements of matrices A and B in the mathematical formulation) are determined with some constraints also present in the grey-box modeling.

In the black box modeling process for a three-state system consisting of wall temperature, observable indoor temperature, and internal thermal mass, constraints can be applied to ensure that the model aligns with the physical realities represented in a corresponding grey box model. Specifically, while a general black box model permits all matrix elements to adapt freely to best fit the data, in this case, constraints fix certain matrix elements to zero. This constraint mirrors the absence of direct physical interactions between certain quantities in the real-world system modeled by the grey box, thus ensuring that the black box model's structure remains consistent with the grey box model's physical configuration. This adaptation may apply zeros within the matrix to reflect the specific non-interactions dictated by the grey box model's design.

For instance, the total heat input from the sun (Qsun) remains a relevant feature across the model but is specifically directed in its application. In unrestricted scenarios, Qsun could influence all states in the model. However, in the structured approach of this model, Qsun is constrained to directly affect only the indoor air temperature. This is operationalized by setting specific matrix elements in the model thus restricting the distribution of Qsum's effects to targeted areas of the model. This structured approach ensures that the model not only fits the data but also aligns closely with the physical realities of the building's thermal dynamics.

The identified black-box parameters can be translated into the parameters of a grey-box model. This is done by establishing a relationship between the matrices (A and B) from the black-box model and the parameters of the grey-box model (like thermal resistances and capacities). The equations provided in the methodology make this translation possible by aligning the structure of the black-box model with that of the grey-box model.

In some examples, the black-box matrix representation can be given as:

$$T_{next} = A\, T_{current} + B\, U$$

The translation happens between the A, B matrices of the black-box, and the A, B matrices of the grey-box models.

The translation may involve setting up a series of equations that relate the black-box model parameters to the grey-box parameters. For example, certain elements of the A and B matrices are directly related to the thermal resistance and capacitance in the grey-box model. This relationship is governed by physical laws (like heat transfer equations) and the way the building responds to thermal inputs and environmental conditions.

The set of equations that relate black-box parameters to grey-box parameters can be typically overdetermined, meaning there are more equations than unknowns. This is addressed by using a least squares method, which finds an approximate solution that minimizes the discrepancy between the two models. This solution represents the grey-box model parameters that best fit the black-box model results.

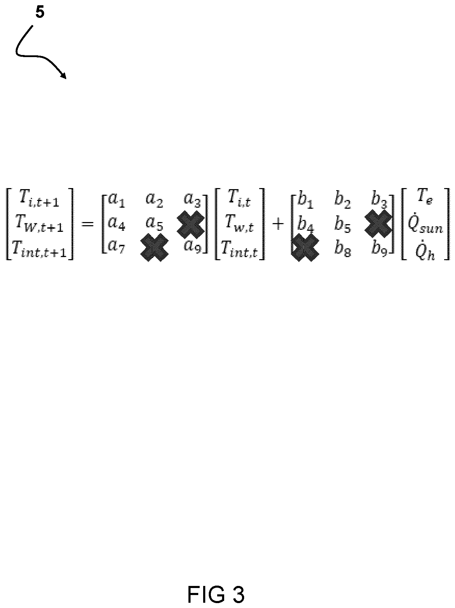

Fig. 3 shows a schematic diagram of an embodiment of a simplified grey-box model 5 used in the thermal characterization of buildings. This model can be used for instance for control.

In the figure, non-physical matrix elements that are set to zero to conform with the constraints of the grey-box model it approximates are highlighted (crossed out).

The simplified model shows a relationships between the internal states at time t and t+1, and how they are influenced by external inputs.

The state transition matrix (A) is shown affecting the temperatures T_i, T_w, and T_int at time t+1 based on their values at time t. The matrix consists of entries a_1 through a_9. Crosses in the matrix represent elements that are set to zero due to non-physical interactions. These zeros reduce the computational complexity and help align the black-box model more closely with the grey-box model's constraints.

The external input matrix (B) describes how external influences such as external temperature $T_e$, solar irradiance $Q_{sun}$, and heating input $Q_h$ affect the state temperatures at time t+1. This matrix contains entries $b_1$ through $b_9$.

Similar to matrix A, crosses indicate zero entries, representing constraints such as no direct effect of external inputs on certain internal states to maintain physical realism in the model.

This matrix setup facilitates a structured approach to simulate the building's thermal dynamics and provides an improved way to update model parameters based on training data.

In some examples, the initial parameters from the black-box model are translated to approximate initial parameters for a grey-box model. This translation employs a series of predefined equations and constraints, ensuring that the parameters refined in the grey-box model are consistent with the outputs derived from the black-box model computations. This step bridges the computational efficiency of black-box models with the nuanced physical insights provided by grey-box models. Further refinement of the grey-box model parameters can then be conducted through an optimization technique. This technique, typically a least squares method, is applied to iteratively adjust and optimize the model parameters. This iterative refinement process allows for the continual alignment of the grey-box model with observed data, progressively reducing discrepancies between model predictions and actual data. By fitting the refined grey-box model parameters to the building model, the invention ensures a high degree of fidelity to observed data, thereby significantly improving the model's utility for predictive and analytical purposes.

The elimination of certain variables from the model can drastically alter its predictive capabilities. In traditional black box models, hidden states such as wall temperatures or thermal delays from floor heating are not explicitly modeled, leading to a generic representation of temperature dynamics. By introducing constraints, such as setting specific matrix elements to zero, more physical context is given to the relationships between observable and unobservable states, thereby enhancing the model's representational fidelity to actual physical phenomena.

The training of the model may primarily utilizes three inputs: ambient temperature ($T_e$), solar irradiance ($Q_{sun}$), and heating input ($Q_h$). The training configuration may for instance disregard any unobservable states, focusing only on defined variables. A crucial advancement in this methodology is the introduction of physical limitations on these inputs, aiming to make the training more reflective of actual structural/physical conditions. This approach may involve not only structuring the black box model training by not only setting certain matrix elements to zero but also enforcing constraints like the sum of the rows equating to zero. This strategic imposition of constraints serves to narrow the parameter solution space, guiding the model towards a solution that embodies a physically realistic representation of the system.

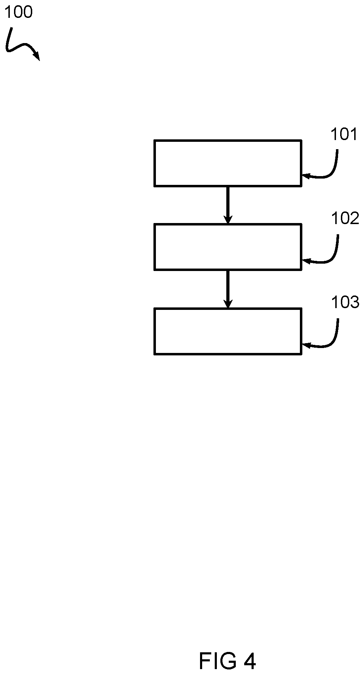

Fig. 4 shows a schematic diagram of a method 100 for thermal characterization of a building for thermal assessment and/or control. In a first step 101, a black-box fit is performed to generate model parameters of a black-box model based on training data associated to the building. In a second step 102, initial model parameters of a grey-box model are determined based on the model parameters of the black-box model, wherein the determination of initial model parameters of the grey-box model involves a parameter mapping process that translates model parameters of the black-box model into an equivalent set of parameters for the grey-box model, wherein a series of predefined equations and constraints are employed in order to ensure that the grey-box model parameters are aligned with quantitative outcomes derived from black-box model computations. In a third step 103, the grey-box model parameters are iteratively refined by fitting the grey-box model parameters to observed data using an optimization technique for reducing discrepancies between model predictions obtained by means of the grey-box model and observed data. Advantageously, during the black-box fit linear constraints are employed/imposed on the black-box model parameters based on modelling of the grey-box model in order to restrict a solution space.

The approach can effectively employ modeling techniques to improve parameter estimation and/or model accuracy. In some examples, by incorporating structural information from the buildings directly into the modeling process, the parameter space is limited strategically. This can ensure that only physically plausible model parameters are considered, enhancing the realism and reliability of the models. In order to avoid the pitfalls of local minima, which can lead to suboptimal parameter estimation, the parameter space may be diversified. This can be achieved through a multi-shot parameter identification process, where multiple iterations with varied initial guesses are conducted to explore a broad range of possible solutions. This diverse exploration helps in identifying the most likely parameters by comparing different outcomes and selecting the optimal ones based on their fit with observed data. Iterative execution of these steps refines the model parameters progressively, aligning them more closely with real-world data, thereby improving the model's predictive power and utility in thermal assessment and control of buildings.

Training data associated with the building can be collected. This data can include temperature measurements, energy consumption readings, solar irradiance data, and other relevant environmental and operational parameters.

A constrained black-box fit may be carried out to this training data to generate initial model parameters. This fitting includes applying linear constraints to these parameters to limit the solution space, ensuring the model's compliance with physical (cf. based on grey-box model structure) and theoretical considerations like energy conservation.

Utilizing a parameter mapping process, initial parameters obtained from the black-box model can be translated into grey-box model parameters. This process involves solving a set of equations with constraints, using techniques such as the least squares method to align these parameters closely with the physical properties of the building's thermal dynamics.

With initial grey-box model parameters established, the model is subjected to an iterative refinement process. This involves fitting the grey-box model parameters to observed building data (which may differ from the training data initially used) using an optimization technique. Here, a cost function such as the sum of squared relative errors between the model's predictions and the observed data is minimized. During refinement, parameters may be bounded and adjusted to hasten convergence towards an optimal model configuration.

In some examples a controller, leveraging the refined model, executes the developed strategies to manage and control the building's conditions effectively.

The method of the disclosure allows to overcome the manual expert intervention by abandoning the fixed initial guess of the RC-model parameters with a set that is closer to the expected values and thus improve the chances of realizing a success fit.

The training process can be likened to using a simple linear model where indoor temperature may be predicted based on key physical variables like ambient temperature (T_e), solar irradiance (Q_sun), and heating input (Q_h). By integrating known physical relationships into the model, such as ensuring that the sum of coefficients for these variables equals zero, the model is restricted to only plausible solutions that reflect actual physical interactions.

A modeling process can be obtained that that transitions from nonlinear grey box model training to linear black box model training, wherein the efficiency of the overall process is improved by reducing dependencies on initial parameter guesses. This shift allows for more efficient and reliable training while integrating physical constraints based on real-world dynamics. The invention applies targeted constraints within the black box model, ensuring that it mirrors the physical realities of the grey box model, enhancing predictive accuracy and the physical relevance of the system being modeled.

In an example, the following approach may be employed.

In a first step, a soft-constrained black-box fit is employed. This step can be purely data-driven, like a direct grey-box fit, but using a different model structure. It relies on the following observation: each grey-box model can be written as black-box model. However, a black-box model doesn't always correspond to a grey-box model. In other words, the full set of potential grey-box models is injective-only into the set of all potential black-box models.

From a mathematical point of view, a two-state model structure (one hidden state) is given below:

$$C_i \frac{dT_i}{dt} = \frac{T_w - T_i}{R_w/2} + \dot{Q}_h + g_A \dot{Q}_{Sun}$$

$$( \, 1 \, )$$

$$C_w \frac{dT_w}{dt} = \frac{T_i - T_w}{R_w/2} + \frac{T_e - T_w}{R_w/2}$$

$$( \, 2 \, )$$

It describes the evolution ($\frac{dT_i}{dt}$) of the two states $T_i$ and $T_w$ due to temperature differences, heat input $\dot{Q}_h$ and the ambient conditions like outside temperature $T_e$ and solar irradiance $\dot{Q}_{Sun}$. Using a forward Euler method this can be rewritten as:

$$T_{i,next} = T_{i,current} + \frac{1}{C_i} \left[ \frac{T_{w,current} - T_{i,current}}{R_w/2} + \dot{Q}_h + g_A \dot{Q}_{Sun} \right] \Delta t$$

$$( \, 3 \, )$$

$$T_{w,next} = T_{w,current} + \frac{1}{C_w} \left[ \frac{T_{i,current} - T_{w,current}}{R_w/2} + \frac{T_e - T_w}{R_w/2} \right] \Delta t$$

$$( \, 4 \, )$$

Which leads after reshuffling to the following, equivalent set of equations:

$$T_{i,next} = \left(1 - \frac{\Delta t}{C_i R_w/2}\right) T_{i,current} + \frac{\Delta t}{C_i R_w/2} T_{w,current} + \frac{\Delta t}{C_i} \dot{Q}_h + \frac{g_A \Delta t}{C_i} \dot{Q}_{Sun}$$

$$(5)$$

$$T_{w,next} = \frac{\Delta t}{C_w R_w/2} T_{i,current} + \left(1 - \frac{2\Delta t}{C_w R_w/2}\right) T_{i,current} + \frac{\Delta t}{C_w R_w/2} T_e$$

$$(6)$$

The two equations above can again be rewritten as a matrix reformulation:

$$T_{next} = A\,T_{current} + B\,U$$

$$(7)$$

Here, $T_{next}$ and $T_{current}$ are 2×1 vectors $\begin{bmatrix} T_{i,next} \\ T_{w,next} \end{bmatrix}$ and $\begin{bmatrix} T_{i,current} \\ T_{w,current} \end{bmatrix}$, while $U$ is a 3x1 vector: $\begin{bmatrix} T_e \\ \dot{Q}_h \\ \dot{Q}_{Sun} \end{bmatrix}$.

$A$ is a 2-by-2 matrix acting upon the current state:

$$A = \begin{bmatrix} 1 - \dfrac{\Delta t}{C_i R_w/2} & \dfrac{\Delta t}{C_i R_w/2} \\ \dfrac{\Delta t}{C_w R_w/2} & 1 - \dfrac{2\Delta t}{C_w R_w/2} \end{bmatrix}$$

$$(8)$$

And $B$ is a 3-by-2 matrix acting upon the external inputs:

$$B = \begin{bmatrix} 0 & \dfrac{\Delta t}{C_i} & \dfrac{g_A \Delta t}{C_i} \\ \dfrac{\Delta t}{C_w R_w/2} & 0 & 0 \end{bmatrix}$$

$$(9)$$

Alternatively, one can formulate a 2-state black box model in exactly the same way:

$$T_{next} = A\,T_{current} + B\,U$$

$$(10)$$

There is one important distinction: in this formulation the matrix elements of matrices $A$ and B can take any value:

$$A = \begin{bmatrix} a1 & a2 \\ a3 & a4 \end{bmatrix}, B = \begin{bmatrix} b1 & b2 & b3 \\ b4 & b5 & b6 \end{bmatrix}$$

$$(11)$$

Identifying this type of black-box model parameters (i.e. the matrix elements a1 to b6), can be very fast and always leads to a unique and optimal solution as the problem is linear in the parameters.
Instead of allowing all possible values during the black-box fit, some soft constraints are imposed. These can be:

- According to the matrix representation of the grey-box model (Eq. ( 9 )), b 1, b5 and b6 should be equal to 0. These constraints are imposed on the black-box model during the training procedure instead of allowing them to be non zero;

- The sum of a1 and a2, as well as the sum of a3, a4 and b 1 should be equal to 1. This is necessary to account for conservation of energy.

Within these linear limitations, the training procedure will identify the optimal values for the A and B matrix to reproduce the building response based on the training data provided.

In a second step, initial value determination can be performed. In this step, the grey-box model parameters are identified which, when written in the matrix formulations like Eqn. (8) and (9), approximate the solution found in step 1 the closest. This is done by explicitly writing the relationship between the matrix elements from Eq. (11) and the matrices defined in Eqn. (8) and (9):

$$
\begin{cases}
a_1 = 1 - \dfrac{\Delta t}{C_i R_w/2} \\[2mm]
a_2 = \dfrac{\Delta t}{C_i R_w/2} \\[2mm]
a_3 = \dfrac{\Delta t}{C_w R_w/2} \\[2mm]
a_4 = 1 - \dfrac{2\Delta t}{C_w R_w/2} \\[2mm]
b_2 = \dfrac{\Delta t}{C_i} \\[2mm]
b_3 = \dfrac{g_A \Delta t}{C_i} \\[2mm]
b_4 = \dfrac{\Delta t}{C_w R_w/2}
\end{cases}
$$

This set of 7 equations with 5 unknowns is overdetermined, but an approximate solution can be found. One difficulty here is that usually there are several orders of magnitude difference between the different matrix elements on the left side, ranging between typically 10E-7 to 1. It is therefore advisable to redefine this set of equations as:

$$
\begin{cases}
\dfrac{a_1 - \left[1 - \dfrac{\Delta t}{C_i R_w/2}\right]}{a_1} = 0 \\[4mm]
\dfrac{a_2 - \dfrac{\Delta t}{C_i R_w/2}}{a_2} = 0 \\[4mm]
\dfrac{a_3 - \dfrac{\Delta t}{C_w R_w/2}}{a_3} = 0 \\[4mm]
\dfrac{a_4 - \left[1 - \dfrac{2\Delta t}{C_w R_w/2}\right]}{a_4} = 0 \\[4mm]
\dfrac{b_2 - \dfrac{\Delta t}{C_i}}{b_2} = 0 \\[4mm]
\dfrac{b_3 - \dfrac{g_A \Delta t}{C_i}}{b_3} = 0 \\[4mm]
\dfrac{b_4 - \dfrac{\Delta t}{C_w R_w/2}}{b_4} = 0
\end{cases}
$$

This set of equations stipulates that the relative residuals should all be as small as possible.

Solving this set of equations can be done using a least squares method. Again this method is subject to the initial guess of the parameters which are provided (and bounds). However, this method is very fast and several hundreds to even thousands combinations of initial guesses can be provided to the least squares method and all results (parameters and cost) are saved.

The distribution of initial guesses can be generated. In order to cover "all" potential buildings, and thus grey-box model parameters, the distribution of initial guesses to the least squares method may be very broad, in this example:

- For the capacitors, the range is between 10E+5 to 10E+10;
- For resistors, the range is between 1E-6 to 1E-2;
- gA is less than 1000 and much smaller in most cases (10 to 50);
- f_rad (not present in the 2-state model) is between 0 and 1.

For both capacitors and resistors a uniform distribution on a logarithmic scale is chosen to ensure all possible outcomes are evaluated/tried in equal amounts.

Once the multi-shot least square procedure has been concluded, a few possibilities exist which can be used to select the "best" solution (combination of grey-box model parameters). Various metrics/procedures can be used for this purpose.

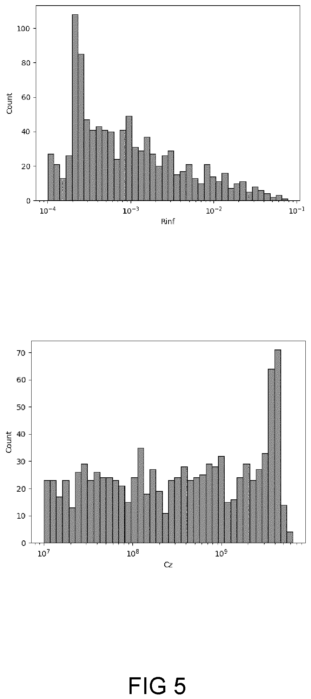

For example, as shown in fig. 5, a peak in result distribution may be identified. In this figure, an example of this method is given, showing the histogram for the value of two different parameters (resistance to the left, capacitance to the right) after the multi-shot procedure. The most prevalent solution can be adopted as being the most likely one.

Additionally or alternatively, statistics may be employed: mode, mean or median. The mean and median of a distribution are straightforward to calculate but tend to give wrong results when the distribution is skewed. The mode gives the "most probable value" of the distribution and is thus equivalent to selecting the bin with the highest prevalence presented in fig. 5. However, the mode of a continuous distribution is not well defined. This issue can be circumvented in an advantageous way as follows:

1. For each parameter calculate the log of all values that result from the multi-shot procedure. For instance when a value of 7.653.984 is found during an iteration of the multi-shot procedure, this becomes 6.8838 ... ;
2. Multiply these log-results by a predetermined value, for instance 10. The result from the previous step becomes 68.838... Exact number can be tweaked, a higher scaling allows for better precision but also a larger set of data from the multi-shot procedure
3. Convert the results to integers (discretization). The example becomes 69
4. Calculate the mode for this discretized set
5. The mode of the original continuous distribution is then 10E+(discrete mode/10)

In some examples, it is relied on results with the minimal cost. From the multi-shot procedure also the cost, which is the sum of the squared residuals) is saved. An option might be to take the solution which results in the lowest cost; or to investigate a set of solutions which are "close" to the lowest cost.

In a third step, RC-model parameter fitting may be employed. Using the results for R and C parameters from this step, the regular fitting routing is started with the initial guess set to these RC parameters. This can be used as a starting point, which is in principle close to the optimal black-box model. It can then be finetuned in the parameter space surrounding this starting point.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1.  A computer-implemented method for thermal characterization of a building for thermal assessment and/or control, including the steps of:

    performing a black-box fit to generate model parameters of a black-box model based on training data associated to the building;

    determining initial model parameters of a grey-box model based on the model parameters of the black-box model, wherein the determination of initial model parameters of the grey-box model involves a parameter mapping process that translates model parameters of the black-box model into an equivalent set of parameters for the grey-box model, wherein a series of predefined equations and constraints are employed in order to ensure that the grey-box model parameters are aligned with quantitative outcomes derived from black-box model computations; and

    iteratively refining the grey-box model parameters by fitting the grey-box model parameters to observed data using an optimization technique for reducing discrepancies between model predictions obtained by means of the grey-box model and observed data; and

    wherein during the black-box fit linear constraints are employed on the black-box model parameters based on modelling of the grey-box model in order to restrict a solution space.

2.  The method of claim 1, wherein during the black-box fit constraints are imposed on the black-box model parameters based on energy conservation principles.

3.  The method of any one of the preceding claims, wherein the parameter mapping process involves solving a set of equations that represent a relationship between the black-box model parameters and the grey-box model parameters, using a least squares method to approximate grey-box model parameters.

4.  The method of any one of the preceding claims, wherein the optimization technique for refining the grey-box model parameters utilizes a cost function that measures the sum of squared relative errors between computed grey-box model predictions and observed data.

5.  The method of any one of the preceding claims, wherein the optimization technique involves adjusting bounds and initial values of the grey-box model parameters during the iterative refinement process to accelerate convergence towards an optimal solution.

6.  The method of any one of the preceding claims, wherein the grey-box model is a resistor-capacitor, RC, model, and the determination of initial model parameters of the grey-box model involves translating the initial model parameters of the black-box model into RC-model parameters, such that the translation accounts for the physical properties of thermal resistances and capacities represented in the RC-model, wherein the translation includes applying a series of mathematical relationships that align matrix elements of the black-box model with equivalent thermal resistance and capacity values in the RC-model.

7. The method of claim 6, wherein building-specific data is utilized to adjust initial estimations of resistance-capacitance (RC) model parameters.

8. The method of any one of the preceding claims, wherein the iterative refinement of grey-box model parameters includes using information from lower order models as initial values.

9. The method of any one of the preceding claims, further comprising a multi-shot parameter identification for the selection of optimal grey-box model parameters, wherein multiple iterations of parameter estimation are conducted, each with varied initial guesses, to generate a dataset of potential solutions.

10. The method of any one of the preceding claims, wherein the observed data used for iteratively refining the grey-box model parameters includes at least one of temperature measurements, energy consumption data, or solar irradiance data specific to the building being thermally characterized.

11. The method of any one of the preceding claims, wherein one or more matrix elements of the grey-box model are set to zero to reflect the absence of physical connections or energy transfer pathways in the grey-box model and/or one or more matrix elements of the grey-box model are set so that their sums equal one to enforce energy conservation within the system, such that the total energy input equals the total energy output, so as to maintain physical integrity of the model.

12. A system for thermal characterization of a building for thermal assessment and/or control, the system comprising a data processing unit configured to perform the steps of:

performing a black-box fit to generate initial model parameters of a black-box model based on training data associated to the building;
determining initial model parameters of a grey-box model based on the initial model parameters of the black-box model, wherein the determination of initial model parameters of the grey-box model involves a parameter mapping process that translates model parameters of the black-box model into an equivalent set of parameters for the grey-box model, wherein a series of predefined equations and constraints are employed in order to ensure that the grey-box model parameters are aligned with quantitative outcomes derived from black-box model computations; and
iteratively refining the grey-box model parameters by fitting the grey-box model parameters to observed data using an optimization technique for reducing discrepancies between model predictions obtained by means of the grey-box model and observed data; and
wherein during the black-box fit linear constraints are employed on the black-box model parameters based on modelling of the grey-box model in order to restrict a solution space.

13. A computer-implemented method for performing energy control in a building, comprising performing the steps of any one of the preceding claims 1-11, and wherein the refined grey-box model is utilized to develop and/or implement control strategies for the building's energy management system based on predictions generated by the refined grey-box model.

14. A controller for controlling conditions of a building using predictions of a grey-box model obtained by performing the method of any one of the preceding claims 1-11.

15. A computer program product for characterizing a building for thermal assessment and/or control, the computer program product comprising a non-transitory computer-readable medium having computer-readable instructions stored thereon which, when executed by a processor, cause the processor to perform the method of any one of the preceding claims 1-11.

FIG 1

9

10

Zone wall int B

$$C_{int}\frac{dT_{int}}{dt} = \frac{T_i - T_{int}}{R_{int}} + f_{rad}\dot{Q}_h$$

$$C_i\frac{dT_i}{dt} = \frac{T_w - T_i}{R_{vent}/2} + \frac{T_{int} - T_i}{R_{int}} + (1 - f_{rad})\dot{Q}_h + g_A\,\dot{Q}_{Sun} + \frac{T_e - T_i}{R_{inf}}$$

$$C_w\frac{dT_w}{dt} = \frac{T_i - T_w}{R_{vent}/2} + \frac{T_e - T_w}{R_{vent}/2}$$

FIG 2

**5**

$$
\begin{bmatrix} T_{i,t+1} \\ T_{W,t+1} \\ T_{int,t+1} \end{bmatrix} = \begin{bmatrix} a_1 & a_2 & a_3 \\ a_4 & a_5 & \text{✖} \\ a_7 & \text{✖} & a_9 \end{bmatrix} \begin{bmatrix} T_{i,t} \\ T_{w,t} \\ T_{int,t} \end{bmatrix} + \begin{bmatrix} b_1 & b_2 & b_3 \\ b_4 & b_5 & \text{✖} \\ \text{✖} & b_8 & b_9 \end{bmatrix} \begin{bmatrix} T_e \\ \dot{Q}_{sun} \\ \dot{Q}_h \end{bmatrix}
$$

FIG 3

100

101

102

103

FIG 4

FIG 5

Europäisches
Patentamt

European
Patent Office

Office européen
des brevets

**EUROPEAN SEARCH REPORT**

**Application Number**

EP 24 21 5221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PARK HERIE ET AL: "Modeling of a Building System and its Parameter Identification", JOURNAL OF ELECTRICAL ENGINEERING & TECHNOLOGY, vol. 8, no. 5, 1 September 2013 (2013-09-01), pages 975-983, XP093276862, DOI: 10.5370/JEET.2013.8.5.975 * the whole document * * abstract * * section 2.2 * * section 3.1.3 * * section 3.2.3 * * figures 3,4 * * page 979, column 2 * * page 977, column 1 * * equations (14) and (15) * ----- | 1-15 | INV. G06F30/13 G06F30/27 G05D23/00 ADD. G06F111/10 G06F119/08 G06F111/04 |
| Y | DIMITRIOU VANDA ET AL: "Data-driven Simple Thermal Models: The Importance of the Parameter Estimates", ENERGY PROCEDIA, vol. 78, 30 December 2015 (2015-12-30), pages 2614-2619, XP029375940, DOI: 10.1016/J.EGYPRO.2015.11.322 * the whole document * * abstract * * table 2 * * section 3.1 * * section 3.2 * ----- -/-- | 1-15 | TECHNICAL FIELDS SEARCHED (IPC) G06F G05D |

The present search report has been drawn up for all claims

| Place of search | Date of completion of the search | Examiner |
|---|---|---|
| Munich | 13 May 2025 | Rungger, Matthias |

EPO FORM 1503 03.82 (P04C01)

Europäisches
Patentamt

European
Patent Office

Office européen
des brevets

## EUROPEAN SEARCH REPORT

**Application Number**

EP 24 21 5221

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KOUMBARI NICOS ET AL: "Thermal Dynamic Models for Predicting the Indoor Temperature of Multi-Zone Buildings", PROCEEDINGS OF THE IEEE INTERNATIONAL CONFERENCE ON SMART ENERGY SYSTEMS AND TECHNOLOGIES, 10 September 2024 (2024-09-10), pages 1-6, XP034718223, DOI: 10.1109/SEST61601.2024.10694232 * the whole document * * abstract * * section ii.a * * section iii.c * * section iv.b * * equation (6) * | 1-15 | |

-----

TECHNICAL FIELDS
SEARCHED (IPC)

The present search report has been drawn up for all claims

| Place of search | Date of completion of the search | Examiner |
|---|---|---|
| Munich | 13 May 2025 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P04C01)

page 2 of 2